# EUROPÄISCHE PATENTANMELDUNG

(11) **EP 1 854 836 A1**
(43) Veröffentlichungstag der Anmeldung: **14.11.2007**
(21) Anmeldenummer: 06090072.7
(22) Anmeldetag: 10.05.2006
(51) Int. Cl.: C08J 11/04, C08J 11/06, C08L 99/00, F16L 59/00, E04B 1/74

(54) **Verfahren zum Umwandlung von umweltschädlichen und/oder gesundheitschädigenden Reststoffen in Formkörper für die Verwendung im Baubereich**

(71) Anmelder: Koryszczuk, Kurt, 16548 Glienike-Nordbahn (DE)
(72) Erfinder: Koryszczuk, Kurt, 16548 Glienicke-Nordbahn (DE)
(74) Vertreter: Boeckh, Tobias

(57) **Zusammenfassung**

Die Erfindung betrifft ein Verfahren zur Umwandlung von umweltschädlichen Reststoffen in Formkörper/Werststoffe.

## Beschreibung

Die Erfindung betrifft ein Verfahren zur Umwandlung von umweltschädlichen Reststoffen in Formkörper bzw. Wertstoffe für die Verwendung im Baubereich.

In den vergangenen Jahren haben zum einen nationale Gesetzgeber die Bestimmungen verschärft, die den Umgang mit Reststoffen, z. B. Sondermüll, betreffen. Zum anderen haben sich insbesondere die Wirtschaftszweige verstärkt entwickelt, in denen derartige Reststoffe anfallen. Diese Entwicklung führt dazu, dass intensiv nach Wegen gesucht werden muss, um diese Reststoffe in einer akzeptablen Art und Weise zu recyceln.

Bei einigen Reststoffen ist die Verwertung nahezu problemlos, wie z. B. bei Güllereststoffen, die in Biogasanlagen verarbeitet werden können. Andere Reststoffe können hingegen nur sehr schwer weiterverarbeitet werden. So dürfen beispielsweise Reststoffe der Pulverlacke verarbeitenden oder der Glas verarbeitenden Industrie nicht mehr mit dem bisher bekannten Verfahren deponiert und somit entsorgt werden. Aber selbst Produkte, die natürlicherweise auftreten, müssen aufgrund der bestehenden Gesetzeslage zum Teil wie Sondermüll behandelt werden. So ist es den touristisch aktiven Gemeinden an den Küsten nicht mehr gestattet, das - die Touristen störende - Seegras zu sammeln, um es anschließend auf eine Deponie zu verbringen. Diese Situation stellt Industriebetriebe, Handwerksbetriebe aber auch Kommunen und Gemeinden vor große Probleme.

Aufgabe der Erfindung war es daher, ein einfaches, sicheres und effektives Verfahren zur Umwandlung von umweltschädlichen Reststoffen in nicht umweltschädliche Produkte bereitzustellen.

Diese Aufgabe wird gelöst durch ein Verfahren zur Umwandlung von umweltschädlichen Reststoffen, dadurch gekennzeichnet, dass die umweltschädlichen Reststoffe Kunststoffe mit mindestens 55 Gew.-% Polyester-, Epoxid-, Polystyrol-, Polyurethan- und/oder Polyamidanteil umfassen, die mit siliziumhaltigen Mikro- und/oder Hohlkugeln und nachwachsenden Rohstoffen pulverisiert und gemischt werden und mit einem Ein- und/oder Zweikomponenten-Klebstoff in Kontakt gebracht und anschließend verpresst werden.

In einer bevorzugten Ausführungsform erfolgt das Pressen bei einer Temperatur im Bereich von 5 - 50°C, bevorzugt 10 - 30°C und ganz besonders bevorzugt bei Raumtemperatur, wobei die Raumtemperatur einen Bereich zwischen 15 und 25°C, insbesondere bei 20°C umfasst.

Der Pressdruck beträgt in einer bevorzugten Ausführungsform 10 - 300 MPa, bevorzugt 50 - 150 MPa, besonders bevorzugt 100 MPa bevorzugt pro Minute.

Überraschenderweise hat sich gezeigt, dass durch diese einfache und sichere Art der Behandlung eine Umwandlung der genannten Reststoffe in ein nicht gesundheits- oder umweltschädigendes Produkt (Wertstoff) erfolgt. Die mit dem erfindungsgemäßen Verfahren gewonnenen Produkte können z. B. in der Industrie als ziegelartiges Einzelelement, als Fertigbauteil, als Verbindungselement für Wand-, Fassadenkonstruktion, zur Wärmeisolierung, zur Schallisolierung bzw. zur Trittisolierung, zur Feuchtigkeitsisolierung in, an, auf, unter Wänden und Fußböden verwendet werden.

Weiterhin ist es möglich, diese Produkte als Verkleidungsmaterial für Wände, Türen sowie für andere Elemente unterschiedlichster Ausführungsform, z. B. als Platten, Fliesen, Panelen oder andere, zu nutzen.

Selbstverständlich ist es auch möglich, die gewonnen Produkte als Industrieartikel für Verkleidungen oder Gehäuse für Haushaltswaren oder Computer bzw. andere Geräte und Vorrichtungen zu verwenden. Besonders bevorzugt ist die Verwendung als Verpackungsmaterial, Konstruktions- oder Verkleidungselement für Möbel- oder in der Auto-, Flugzeug- und Bahnindustrie. Durch die freien geometrischen Gestaltungsmöglichkeiten des Werkstoffes und seine leichte Bearbeitbarkeit ist auch eine Verwendung als architektonisches oder künstlerisches Element, aber auch als Plastikbestandteil, möglich.

Bei der Anwendung als Fassadenplatten zeigt sich gegenüber den Fassadenplatten des Standes der Technik, dass das gewonnene Produkt auf eine Holz- oder Metalllattung aufgebracht werden kann, wodurch kein getrennter Dämmstoff oder ein oberflächlich aufgetragener Putz nötig ist. Hierdurch können die konventionell erstellten, gedämmten und hinterlüfteten Fassaden ersetzt werden.

Durch spezielle Bearbeitung der Oberfläche - z. B. durch Prägung bei der Plattenherstellung - kann aber selbstverständlich auch ein handelsüblicher Putz leicht aufgetragen werden. Da die erfindungsgemäßen Produkte einen sehr geringen Ausdehnungskoeffizienten haben, erfolgt keine Bewegung des Untergrundes und somit kein Reißen des Putzes.

Aufgrund der guten Wärmeeigenschaften des Material ist auch das Aufheizen dieser, beispielsweise als Fassadendekoration bzw. Fassadenkonstruktion, deutlich vermindert. Vorteilhafterweise ist eine solche Fassade auch überstreichbar. Demgemäß eignet sich das erfindungsgemäße Material sehr gut für die Sanierung von bestehenden, vorgehängten Altfassaden durch Überdecken. Ein weiterer Vorteil besteht darin, dass die Oberfläche der erfindungsgemäßen Produkte strukturiert werden kann, d. h. die Platten können lackiert, gepulvert, mit Kunststofffolien überzogen oder selbst als Plattenmaterial eingefärbt werden.

In einer weiteren bevorzugten Ausführungsform der Erfindung handelt es sich bei den nachwachsenden Rohstoffen insbesondere im pulverisierte Bestandteile aus Seegras, Hanf, Jute, Flachs, Ramie bzw. um Kokosfasern, Stroh, Holzfasern, Baumwolle, Leinen oder andere. Im Sinne der Erfindung sind nachwachsende Rohstoffe alle land- und forstwirtschaftlich erzeugten Produkte, die einer Verwendung im Nicht-Nahrungsbereich zugeführt werden können.

In einer weiteren bevorzugten Ausführungsform sind die Mikro- und/oder Hohlkugeln Glas und insbesondere Blähglas-Bestanteile bevorzugt mit einer Dichte unter 1. Bei den Kunststoffen mit einem mindestens 55 Gew.-% Anteil von Polyester, Epoxid, Polystyrol, Polyurethan und oder Polyamiden handelt es sich um Kunststoffe, die von den genannten Verbindungen mindestens 60 Gew.-%, bevorzugt mindestens 70 Gew.-% aufweisen. Weiterhin ist es bevorzugt, dass diese Ausgangsmaterialien (Kunststoffe) eine Korngröße von 0,1 bis 0,5 mm besitzen. Bevorzugt handelt es sich bei diesen Verbindungen um duroplastische oder thermoplastische Pulverlacke. Pulverlacke im Sinne der Erfindung setzen sich aus drei Bestandteilen zusammen: Bindemittel, Härter (auch als Vernetzer bezeichnet) und Pigmente.

Die anmeldungsgemäße Lehre zeichnet sich durch folgende Merkmale aus:
- Abkehr vom technisch Üblichen
- neue Aufgabenstellung
- Vorliegen eines seit langem ungelösten dringenden Bedürfnisses für die Lösung des mit der Erfindung gelösten Problems
- bisheriges vergebliches Bemühen der Fachwelt
- die Einfachheit der Lösung spricht für erfinderische Tätigkeit, insbesondere da sie kompliziertere Lehren ersetzt
- Entwicklung der wissenschaftlichen Technik ging in eine andere Richtung
- entwicklungsstraffende Leistung
- Fehlvorstellungen der Fachwelt über die Lösung des entsprechenden Problems (Vorurteil)
- technischer Fortschritt, wie z. B.: Verbesserung, Leistungssteigerung, Verbilligung, Ersparnis an Zeit, Material, Arbeitsstufen, Kosten oder schwer beschaffbaren Rohstoffen, erhöhte Zuverlässigkeit, Beseitigung von Fehlern, Qualitätshebung, Wartungsfreiheit, größere Effektivität, höhere Ausbeute, Vermehrung der technischen Möglichkeiten, Bereitstellung eines weiteren Mittels, Eröffnung eines zweiten Weges, Eröffnung eines neuen Gebietes, erstmalige Lösung einer Aufgabe, Reservemittel, Alternativen, Möglichkeit der Rationalisierung, Automatisierung oder Miniaturisierung oder Bereichung des Arzneimittelschatzes
- glücklicher Griff, da aus einer Vielzahl von Möglichkeiten eine bestimmte gewählt wurde, deren Ergebnis nicht vorausgesagt werden konnte, daher handelt es sich um ein patentwürdigen glücklichen Griff)
- Irrtum in Entgegenhaltungen
- junges Gebiet der Technik
- Kombinationserfindung, d.h. mehrere bekannte Elemente werden zu einer Kombination zusammengeführt, die einen überraschenden Effekt aufweist
- Lizenzvergabe
- Lob der Fachwelt und
- wirtschaftlicher Erfolg.
Im Folgenden soll die Erfindung anhand von Beispielen näher erläutert werden, ohne auf diese Beispiel beschränkt zu sein.

### Beispiel 1

Pulverlackreste (auf Polyester/Epoxidbasis) von der mittleren Teilchengröße 10-25 µg, recycelte Glaskugeln (Poraver) mit einer Korngrößenverteilung von 0.1-0.3 mm und Seegras (zostera dämm)/(Pulverkonsistenz) wurden in einem Trommelmischer bei normaler Raumtemperatur (15-20°C) ca. 5-10 Minuten lang gut vermischt. Dieses Halbfabrikat kann, so wie es ist, gut gelagert oder weiterverarbeitet werden. Dieses Halbfabrikat wird anschließend mit einem lösemittelfreien Zweikomponenten-Klebstoff (Henkel-Ubatol UK 820) auf Polyurethanbasis intensiv 5-10 Minuten lang vermischt, wobei die beiden Komponenten (Harzkomponente und Härtekomponente) in einem Gewichtsverhältnis von 4:1 zu verwenden sind. Durch die spontan einsetzende chemische Reaktion wird eine stabile Bindung hervorgerufen, so dass das Gemisch in eine Form eingeschüttet werden kann. Die Abmessung der Form beträgt 300 x 300 x 10 mm. Nun wird diese Form mit einer Abdeckplatte versehen und in eine beheizbare Plattenpresse geschoben. Bei 20°C und 100 MPa wird das Gemisch ca. 1 Minute verpresst, anschließend wird entformt und ca. 10 Minuten lang zum vollständigen Aus- bzw. Durchhärten ruhen lassen.
Des Gemisch bestand aus:
30 Gew.-% Pulverlackreste
20 Gew.-% recycelte Glaskugeln
20 Gew.-% Seegras (Pulverkonsistenz)
30 Gew.-% Zweikomponentenklebstoff
Es ergab sich ein dauerhafter, fester Verbund mit einer sehr glatten, ebenen Oberfläche.

### Beispiel 2

30 Gew.-% Pulverlackreste
20 Gew.-% recycelte Glaskugel
20 Gew.-% Flammschutzmittel (Ammonium Polyphosphat/Zinkborat)
30 Gew.-% Zweikomponentenklebstoff
wurden in einem Mischer intensiv vermischt, anschließend in eine Plattenform, die mit einer PTFE-Beschichtung versehen ist, geschüttet. Es erfolgte eine Pressung in einer Plattenpresse bei 20°C und 100 MPa für 1 Minute. Es wurde entformt und ca. 10 Minuten lang ruhen lassen. Die Brandversuche, welche mit dem Plattenmaterial nach DIN 4102 durchgeführt wurden, verliefen positiv.

### Beispiel 3

30 Gew.-% Pulverlackreste
10 Gew.-% recycelte Glaskugel
20 Gew.-% Seegras (Pulverkonsistenz)
10 Gew.-% Flammschutzmittel
30 Gew.-% Zweikomponentenklebstoff
wurden gemischt, gepresst, entformt und ausgehärtet. Bei den Brandversuchen mit diesem Plattenmaterial (wobei ein Austausch der Füllkomponenten erfolgte) zeigten die Ergebnisse gleiche Werte wie bei Beispiel 2, obwohl ein Anteil der teureren Flammschutzmittel gegen das preisgünstigere und umweltfreundliche Seegras ausgetauscht wurde.

## Patentansprüche

1. Verfahren zur Umwandlung von umweltschädlichen Reststoffen, insbesondere Pulverlackresten und Seegras,
**dadurch gekennzeichnet, dass**
die umweltschädlichen Reststoffe Kunststoffe mit mindestens 55 Gew.-% Polyester-, Epoxid-, Polystyrol-, Polyurethan- und/oder Polyamidanteil umfassen und bevorzugt Pulverlackreste sind, die mit siliziumhaltigen Mikro- und/oder Hohlkugeln, bevorzugt Blähglas, und nachwachsenden Rohstoffen, insbesondere Seegras, pulverisiert und gemischt werden und mit einem Ein- und/oder Zweikomponenten-Klebstoff in Kontakt gebracht und anschließend verpresst werden.

2. Verfahren nach Anspruch 1,
**dadurch gekennzeichnet, dass**
die Ausgangsstoffe, bevorzugt die Pulverlackreste, das Blähglas und das Seegras, in pulverisierter Form gemischt werden, wodurch ein lagerfähiges Halbfabrikat entsteht, und das Halbfabrikat mit dem Ein- und/oder Zweikomponenten-Klebstoff in Kontakt gebracht wird.

3. Verfahren nach Anspruch 1 oder 2,
**dadurch gekennzeichnet, dass**
das Verpressen bei einer Temperatur im Bereich von 5 - 50°C, bevorzugt 10 - 30°C und ganz besonders bevorzugt bei Raumtemperatur erfolgt.

4. Verfahren nach Anspruch 1 bis 3,
**dadurch gekennzeichnet, dass**
die Raumtemperatur einen Bereich zwischen 15 und 25°C, insbesondere 20°C umfasst.

5. Verfahren nach einem der Ansprüche 1 bis 4,
**dadurch gekennzeichnet, dass**
das Verpressen bei einem Pressdruck von 10 - 300 MPa, bevorzugt 50 - 150 MPa, besonders bevorzugt 100 MPa pro erfolgt.

6. Wertstoff erhaltbar nach dem Verfahren gemäß den Ansprüchen 1 bis 5.

7. Wertstoff nach Anspruch 6,
**dadurch gekennzeichnet, dass**
dieser als Kunststoff Pulverlack, als die Mikro- und/oder Hohlkugeln Blähglas und als den nachwachsenden Rohstoff Seegras umfasst.

8. Verwendung des Wertstoffs nach Anspruch 6 oder 7 zur Wärme-, Schall-, Tritt- und/oder Feuchtigkeitsisolierung.

9. Verwendung nach dem vorhergehenden Anspruch,
**dadurch gekennzeichnet, dass**
die Isolierung in/an/auf und/oder unter einer Wand oder einem Fußboden oder einer Tür erfolgt.

10. Verwendung nach einem der vorhergehenden Ansprüche,
**dadurch gekennzeichnet, dass**
die Verwendung der Wertstoffe als Verpackungsmaterial, Konstruktions- und/oder Verkleidungselement in der Möbel-, Auto-, Flugzeug- und/oder Bahnindustrie erfolgt.
